# EUROPÄISCHE PATENTSCHRIFT

(11) **EP 0 870 566 B1**
(45) Veröffentlichungstag und Bekanntmachung des Hinweises auf die Patenterteilung: **10.10.2001**
(21) Anmeldenummer: 98810266.1
(22) Anmeldetag: 25.03.1998
(51) Int. Cl.: B23K 1/19

(54) **Verfahren zum Löten von gerichtet erstarrten oder einkristallinen Komponenten**
Method for brazing directionally solidified or single crystal components
Procédé de brassage de composants à solidification directionnelle ou monocristallins

(30) Priorität: 08.04.1997 DE 19714530
(43) Veröffentlichungstag der Anmeldung: 14.10.1998
(73) Patentinhaber: Asea Brown Boveri AG, 5401 Baden (CH)
(72) Erfinder: Baumann, Robert, 5313 Klingnau (CH); Fritsche, Bernhard, 8400 Winterthur (CH)
(74) Vertreter: Kaiser, Helmut

(56) Entgegenhaltungen:
- US-A- 5 240 491
- US-A- 5 248 240
- US-A- 5 318 406

## Beschreibung

### Technisches Gebiet

Die Erfindung geht aus von einem Verfahren zum Löten von gerichtet erstarrten oder einkristallinen Komponenten nach dem Oberbegriff des ersten Anspruches (siehe Z.B. US-A- 5 318 406).

### Stand der Technik

Schweissen und Löten sind die gängigsten Verfahren zur Wiederherstellung von Konturen und zum Verbinden von Gasturbinenkomponenten, welche konventionell im Gussverfahren hergestellt werden. Durch höhere Wirkungsgrade und damit höhere Turbineneintrittstemperaturen der Gasturbinen wurden jedoch Bauteile benötigt, die bei höheren Temperaturen bessere Werkstoffeigenschaften aufweisen. Dies kann durch verbesserte Werkstoffe oder durch gerichtet erstarrte oder einkristalline Komponenten erreicht werden. Diese Werkstoffe oder Komponenten sind schwer schweissbar, daher wurde mit Löten versucht, solche Komponenten zu reparieren. Durch Dünnspaltlöten mit einer Spaltbreite von weniger als 0.1 mm konnten im aufgetragen Material teilweise die Eigenschaften des Grundwerkstoffes erreicht werden. Bei Spaltbreiten grösser als 0.1 mm konnten bei gerichtet und einkristallin erstarrten Komponenten jedoch nur geringe mechanisch Festigkeiten des aufgetragenen Lötgutes erzeugt werden.

### Darstellung der Erfindung

Der Erfindung liegt die Aufgabe zugrunde, bei einem Verfahren zum Löten von gerichtet erstarrten oder einkristallinen Komponenten der eingangs genannten Art Lötgut auf gerichtet und einkristallin erstarrte Komponenten aufzutragen oder solche Komponenten zu verbinden.

Erfindungsgemäss wird dies durch die Merkmale des ersten Anspruches erreicht.

Kem der Erfindung ist es also, dass Lötgut und die gerichtet erstarrte oder einkristalline Komponente durch eine beheizte Zone bewegt wird, dass in dieser Zone die durch eine Heizung aufgebrachte Temperatur grösser ist als die Liquidustemperatur der Lötlegierung und kleiner als die örtliche Voraufschmelz-Temperatur (engl.: incipient melting) der Komponente, d.h. das es nicht zum partiellen Aufschmelzen der Komponente kommt, und dass zwischen der Komponente und dem Lötgut ein thermischer Gradient aufgebracht wird.

Die Vorteile der Erfindung sind unter anderem darin zu sehen, dass die physikalischen und chemischen Eigenschaften des Lötgutes dem gerichtet und einkristallin erstarrten Grundwerkstoff ähnlich ist. Weiter weist das Lötgut eine sehr viel geringere Porosität auf als herkömmliches Lötgut. Zudem werden durch die Möglichkeit des Auftrages von gerichtet erstarrtem Lötgut die Lebensdauerkosten der gerichtet und einkristallin erstarrten Komponenten erhöht.

Durch die Lötung wird die Festigkeit des Grundwerkstoffes erreicht. Weiter können durch dieses Lötverfahren Reparaturen an hochbelasteten Teilen (wie Turbinenschaufeln, Schaufelplattformen, usw.) durchgeführt werden.

Weitere vorteilhafte Ausgestaltungen der Erfindung ergeben sich aus den Unteransprüchen.

### Kurze Beschreibung der Zeichnung

In den Zeichnungen ist ein Ausführungsbeispiel der Erfindung schematisch dargestellt.
Es zeigen:
- Fig. 1a: einen Teillängsschnitt durch eine Lötapparatur;
- Fig. 1b: einen weiteren Teillängsschnitt durch die Lötapparatur;
- Fig. 2: einen Teillängsschnitt durch eine mit Löten reparierte Schaufel;
- Fig. 3: ein Schliffbild durch eine teilweise gerichtet erstarrte Lotlegierung, Vergrösserung 50x;
- Fig. 4: einen vergrösserten Ausschnitt aus Fig. 3, Vergrösserung 100x.

Es sind nur die für das Verständnis der Erfindung wesentlichen Elemente gezeigt.

### Weg zur Ausführung der Erfindung

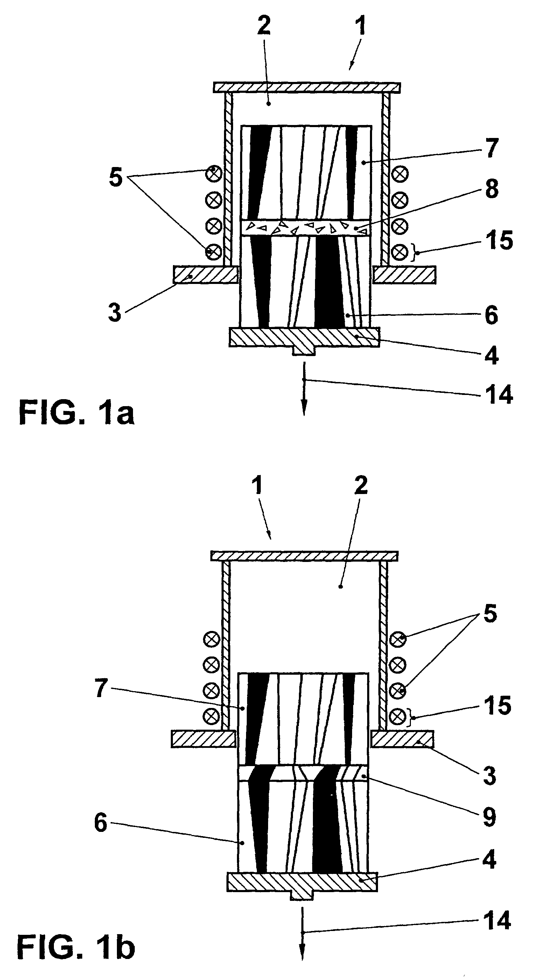

In Fig. 1a ist eine Lötvorrichtung 1 dargestellt, die im wesentlichen aus einer abgeschlossenen Kammer 2, einer Wärmedämmplatte 3 zur Wärmedämmung (engl.: Baffle), einer Platte 4 und mindestens einer Heizvorrichtung 5 besteht. Als Heizvorrichtung 5 wird hier eine induktive Heizung verwendet, es können aber auch andere Heizsysteme zur Anwendung kommen. Auf die Platte 4 wird eine gerichtet erstarrte Komponente 6 aufgelegt. Auf diese Komponente 6 wird eine im wesentlichen der Komponente 6 entsprechende, feste Schicht einer Lötlegierung 8 aufgelegt und auf die Lötlegierung 8 wird wieder eine gerichtet erstarrte Komponente 7 aufgelegt.

Die Lötlegierung besteht beispielsweise aus dem Grundwerkstoff des zu reparierenden Teiles und einer Zugabe eines oder mehrerer schmelzpunktreduzierender Elemente. Als schmelzpunktreduzierendes Element kann beispielsweise Bor, Silizium usw. oder eine Kombination dieser Elemente verwendet werden.

Die drei Komponenten werden durch eine Oeffnung in der Wärmedämmplatte 3 von unten in die Kammer 2 eingefahren, so dass zumindest der obere Teil der unteren gerichtet erstarrten Komponente 6 in die Kammer 2 hineinragt.

Durch die induktive Heizung 5 wird Wärmeenergie in die Komponenten 6, 7 und 8 eingebracht. Durch die Heizung wird ein klar definierter Bereich 15 erzeugt, durch den die Komponenten und das Lötgut in Richtung eines Pfeiles 14 hindurchbewegt werden können. In dieser Zone 15 wird die durch die Heizung 5 erzeugte Temperatur nun so gewählt, dass sie grösser ist als die Liquidus-Temperatur der Lötlegierung 8, aber kleiner als die örtliche Voraufschmelz-Temperatur (engl.: incipient melting temperature) der gerichtet erstarrten Komponente 6. In Richtung der Platte 4 wird durch die Komponenten 6, 8 und das Lötgut 7 ein thermischer Gradient erzeugt. An der Grenzschicht zwischen der Komponente 6 und dem Lötgut 8 dient die dem Lötgut zugewandte Oberfläche der Komponente 6 als Keimbildner für das geschmolzene Lötgut. Wird das geschmolzene Lötgut aus der Zone 15 herausbewegt, sinkt die Temperatur unterhalb die Liquidus-Temperatur. Die Orientierung der Körner der Komponente 6 wird beim Erstarren der Lötlegierung auf die Lötlegierung übertragen. Durch den thermischen Gradienten in Richtung der Platte 4 wird im Lötgut eine gerichtete Erstarrung erzeugt.

Die Platte 4 kann aktiv gekühlt werden, beispielsweise durch Zuführung von kaltem Wasser. In Richtung der Platte 4 wird dadurch der thermischer Gradient vergrössert. Die Heizzone 15 kann deshalb auch grösser gewählt werden, wodurch Einflüsse durch die Grösse der Heizzone vermindert werden.

Nach Fig. 1 b weist die erstarrte Lötlegierung 9 im wesentlichen die gleiche gerichtet erstarrte Struktur auf wie der Grundwerkstoff der Komponenten 6, 7. Die Festigkeit der Lötnaht ist zudem vergleichbar mit derjenigen der Komponenten 6, 7.

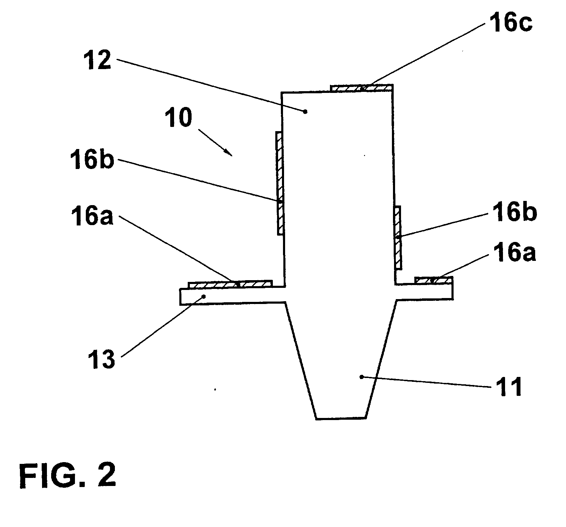

Fig. 2 zeigt eine gerichtet erstarrte oder einkristalline Schaufel 10, im wesentlichen bestehend aus Schaufelfuss 11, Schaufelblatt 12 und einer Plattform 13, auf die an verschiedenen Stellen 16a an der Plattform, 16b am Schaufelblatt und 16c an der Schaufelspitze Lötlegierungen aufgebracht worden sind. Dies geschieht im wesentlichen mit dem gleichen Verfahren wie oben beschrieben.

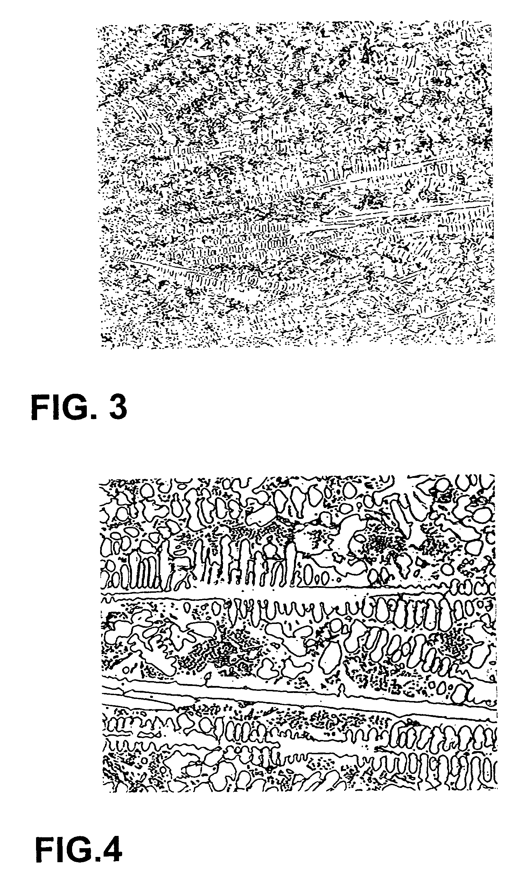

In Fig. 3 und 4 sind verschieden vergrösserte Schliffbilder durch eine erfindungsgemäss erstarrte Lötlegierung dargestellt. Deutlich sind teilweise gerichtet erstarrte Körner in der Lötlegierung sichtbar.

Selbstverständlich ist die Erfindung nicht auf das gezeigte und beschriebene Ausführungsbeispiel beschränkt. Anstelle der gerichtet erstarrten Komponenten können auch einkristalline Komponenten verwendet werden.

### Bezugszeichenliste

- 1: Lötvorrichtung
- 2: Kammer
- 3: Wärmedämmplatte
- 4: Platte
- 5: Induktive Heizung
- 6: gerichtet erstarrte Komponente
- 7: gerichtet erstarrte Komponente
- 8: Lötlegierung/Lötgut
- 9: gerichtet erstarrtes Lötgut
- 10: Schaufel
- 11: Schaufelfuss
- 12: Schaufelblatt
- 13: Plattform
- 14: Bewegungsrichtung
- 15: Zone
- 16a,b,c: Lötstellen

## Patentansprüche

1. Verfahren zum Löten von gerichtet erstarrten oder einkristallinen Komponenten (6, 7, 10) in einer beheizten Zone (5, 15), in welcher die durch eine Heizung (5) aufgebrachte Temperatur grösser als die Liquidustemperatur der Lötlegierung (8, 16) und kleiner als die örtliche Voraufschmelz-Temperatur der Komponente (6, 7, 10) ist
**dadurch gekennzeichnet,**
**dass** Lötgut (8, 16) und die gerichtet erstarrte oder einkristalline Komponente (6, 7, 11), durch die beheizte Zone (5, 15) bewegt werden, und dass zwischen der Komponente (6, 10) und dem Lötgut (8, 16) ein thermischer Gradient aufgebracht wird.

2. Verfahren nach Anspruch 1,
**dadurch gekennzeichnet,**
**dass** mittels des Lötgutes (8, 9) zwei Komponenten verbunden werden.

3. Verfahren nach Anspruch 1,
**dadurch gekennzeichnet,**
**dass** das Lötgut (16a, 16b, 16c) auf eine Komponente (10) aufgebracht wird.

4. Verfahren nach Anspruch 3,
**dadurch gekennzeichnet,**
**dass** die Komponente (10) eine Schaufel ist.

## Claims

1. Method of brazing directionally solidified or monocrystalline components (6, 7, 10) in a heated zone (5, 15) in which the temperature applied by a heating system (5) is greater than the liquidus temperature of the brazing alloy (8, 16) and less than the local incipient melting temperature of the component (6, 7, 10), **characterized in that** the brazing deposit (8, 16) and the directionally solidified or monocrystalline component (6, 7, 11) are moved through the heated zone (5, 15), and **in that** a thermal gradient is applied between the component (6, 10) and the brazing deposit (8, 16).

2. Method according to Claim 1, **characterized in that** two components are joined by means of the brazing deposit (8, 9).

3. Method according to Claim 1, **characterized in that** the brazing deposit (16a, 16b, 16c) is applied to a component (10).

4. Method according to Claim 3, **characterized in that** the component (10) is a blade.

## Revendications

1. Procédé de brasage de composants à solidification directionnelle ou monocristallins (6, 7, 10) dans une zone chauffée (5, 15), dans laquelle la température appliquée par un chauffage (5) est supérieure à la température de liquidus de l'alliage de brasage (8, 16) et inférieure à la température locale de préfusion des composants (6, 7, 10), **caractérisé en ce que** l'on déplace un matériau de brasage (8, 16) et les composants à solidification directionnelle ou monocristallins (6, 7, 10) à travers la zone chauffée (5, 15), et **en ce que** l'on établit un gradient thermique entre le composant (6, 10) et le matériau de brasage (8, 16).

2. Procédé selon la revendication 1, **caractérisé en ce que** l'on assemble deux composants au moyen du matériau de brasage (8, 9).

3. Procédé selon la revendication 1, **caractérisé en ce que** l'on dépose le matériau de brasage (16a, 16b, 16c) sur un composant (10).

4. Procédé selon la revendication 3, **caractérisé en ce que** le composant (10) est une aube.
